# EUROPÄISCHE PATENTSCHRIFT

(11) **EP 1 569 947 B1**
(45) Veröffentlichungstag und Bekanntmachung des Hinweises auf die Patenterteilung: **30.08.2006**
(21) Anmeldenummer: 03767711.9
(22) Anmeldetag: 28.11.2003
(51) Int. Cl.: C07F 15/00, C07F 15/04, B01J 31/00, C07B 61/00

(54) **N -SUBSTITUIERTE N-ACYLAMIDIN - ÜBERGANGSMETALLKOMPLEXE UND DEREN VERWENDUNG ALS KATALYSATOREN**
N'-SUBSTITUTED N-ACYLAMIDINE METAL TRANSITION COMPLEXES AND THEIR USE AS CATALYSTS
COMPLEXES DE METAUX DE TRANSITION N-ACYLAMIDINE N'-SUBSTITUES ET UTILISATION EN TANT QUE CATALYSEURS

(30) Priorität: 04.12.2002 DE 10256854
(43) Veröffentlichungstag der Anmeldung: 07.09.2005
(73) Patentinhaber: BASF Aktiengesellschaft, 67056 Ludwigshafen (DE)
(72) Erfinder: EBERHARDT, Jan, Kurt, 26123 Oldenburg (DE); WÜRTHWEIN, Ernst-Ulrich, 48159 Münster (DE)
(86) Internationale Anmeldenummer: PCT/EP2003/013467
(87) Internationale Veröffentlichungsnummer: WO 2004/050670

(56) Entgegenhaltungen:
- HIRAKI, KATSUMA ET AL: "Formation of N-imidoylimidatoruthenium(II) complexes via ruthenium-promoted hydration of nitriles" JOURNAL OF THE CHEMICAL SOCIETY, DALTON TRANSACTIONS: INORGANIC CHEMISTRY (1996), (3), 291-8 , 1996, XP008028007

## Beschreibung

Die vorliegende Erfindung betrifft N'-substituierte N-Acylamidin-Übergangsmetallkomplexe der allgemeinen Formel I 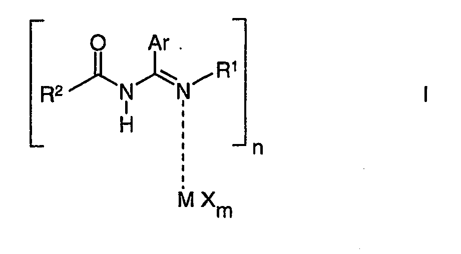 in der
- M: für ein Übergangsmetall, ausgewählt aus der Gruppe der Metalle Ni, Cu, Ru, Rh, Pd, Os, Ir und Pt
- X: für Cl, Br, Triflat, Methansulfonat oder p-Toluolsulfonat
- m: für 0, 1 oder 2,
- n: für 1, 2 oder 3
stehen und die Reste folgende Bedeutung haben:
- R¹, R²: ein geradkettiger oder verzweigter, cyclischer Kohlenwasserstoffrest mit 1 bis 20 Kohlenstoffatomen, der ein- oder mehrfach ungesättigt sein kann, ein aromatischer Rest mit 3 bis 6 Ringgliedern, der direkt oder über eine C₁- bis C₆-Alkyl- oder C₂- bis C₆-Alkylengruppe gebunden ist, wobei die genannten Reste einen oder mehrere Substituenten ausgewählt aus der Gruppe C₁- bis C₆-Alkyl, C₁- bis C₄-Halogenalkyl, OR³, NR R⁵, COOR⁶, Si(R⁷)₃, Si(R⁷)₂R⁸, Halogen, Aryl, C₃-C₈-Cycloalkyl tragen können,
- R³, R ⁶ R⁸: unabhängig voneinander C₁- bis C₁₂-Alkyl, C₇- bis C₁₂-Aralkyl, C₆- bis C₁₀₋Aryl, C₃- bis C₈-Cycloalkyl, C₃- bis C₈-Cycloalkyl, in dem eine CH₂-Gruppe durch O, NH oder NR⁹ ersetzt ist und R⁴ und R⁵ gemeinsam auch -(CH₂)_{y}-, wobei y eine ganze Zahl von 4 bis 7 bedeutet, Hetaryl, oder Hetaralkyl mit 5 bis 6 Ringgliedern im Heteroaromaten bedeutet,
- R⁴, R⁵ und R¹⁰, R¹¹: unabhängig voneinander jeweils Wasserstoff, geradkettiges oder verzweigtes C₁- bis C₁₂-Alkyl, C₇- bis C₁₂-Aralkyl, C₆- bis C₁₀-Aryl, C₃- bis C₈-Cycloalkyl oder C₃- bis C₈-Cycloalkyl, in dem eine CH₂-Gruppe durch O, NH oder NR⁹ ersetzt ist und R⁴ und R⁵ bzw. R¹⁰ und R¹¹ jeweils gemeinsam auch -(CH₂)_{y}-, wobei y eine ganze Zahl von 4 bis 7 ist, bedeuten können;
- R⁷, R⁹: unabhängig voneinander geradkettiges oder verzweigtes C₁- bis C₁₂-Alkyl oder C₇- bis C₁₂-Aralkyl,
- Ar: C₆- bis C₁₀-Aryl oder Hetaryl mit 5 bis 10 Ringgliedern, wobei die genannten Reste durch C₁- bis C₆-Alkyl, C₁- bis C₄-Halogenalkyl, NR¹⁰R¹¹, COOR⁶, Si(R⁷)₃ Si(R⁷)₂R⁸, OR³ und/oder Halogen substituiert sein können.

Darüber hinaus betrifft die Erfindung ein Verfahren zur Herstellung dieser neuen Klasse von Übergangsmetallkomplexen und deren Verwendung als Katalysatoren für organische Reaktionen, insbesondere für Kupplungsreaktionen, bei denen neue Bindungen zwischen Kohlenstoffatomen oder zwischen Kohlenstoffatomen und Heteroatomen geknüpft werden.

Organische und anorganische Übergangsmetallverbindungen sind als Reagenzien oder Katalysatoren in der modernen organischen Synthesechemie mittlerweile unverzichtbar. Auf den vielfältigen Reaktivitätsmustern übergangsmetallorganischer Verbindungen basiert ein bedeutender Teil der heute als Werkzeuge bei der Synthese komplexer organischer Strukturen zur Verfügung stehenden Reaktionen. Besondere Bedeutung haben Synthesemethoden und Katalysatorsysteme erlangt, mit deren Hilfe sich neue Bindungen zwischen Kohlenstoffatomen knüpfen lassen. Diese sogenannten übergangsmetallkatalysierten Kupplungsreaktionen haben unterdessen auch beträchtliche ökonomische Bedeutung gewonnen und sind deshalb noch wie vor Gegenstand intensiver Forschungsbemühungen.

Der aktuelle Kenntnisstand zu übergangsmetallkatalysierten Kupplungsreaktionen ist in zahlreichen Veröffentlichungen zusammengefasst. Exemplarisch sei hier auf F. Diederich et al., Metal-catalyzed Cross-coupling Reactions, Wiley-VCH, Weinheim, 1998 und L. Brandsma et al., Application of Transition Metal Catalysts in Organic Synthesis, Springer, New York, 1998 verwiesen. Eine aktuelle Übersicht gibt auch G. C. Fu et al. in Angew. Chem. 2002, 114, 4350 - 4386.

In den meisten bislang beschriebenen homogenen Übergangsmetall-Katalysatorsystemen wird das katalytisch aktive Übergangsmetall-Zentralatom durch Liganden mit schwachen Donor-Eigenschaften stabilisiert. Eine herausgehobene Stellung nehmen dabei Phosphin-Liganden, insbesondere tertiäre Phosphine ein. Eine erste jüngst entwickelte Alternative zu den oxidations- und temperaturempfindlichen Phosphin-Liganden stellen Ligandensysteme dar, deren Donor-Eigenschaften mittelbar oder unmittelbar auf Stickstoffatome zurückzuführen ist.

So beschreiben W. A. Herrmann et al., Angew. Chem. 2002, 114, 1342 -1363, N-heterocyclische Palladium-Dicarben-Verbindungen und deren Verwendung als Katalysator bei der Kupplung von donorsubstituierten Bromarenen mit Styrol.

Die EP-A-O 719 758 beschreibt die Herstellung aromatischer Olefine aus Halogenaromaten und Olefinen durch Heck-Reaktion in Gegenwart von Palladium-Komplexverbindungen als Katalysatoren, die als Liganden heterocyclische Carbene enthalten.

A. C. Hillier et al. beschreiben in J. Organomet. Chem. 2002, 653, 69 - 82 Palladiumkomplexe mit Monomeren Imidazol-1-yliden-Liganden, mit denen sich Bromaromaten mit Butylacrylat kuppeln lassen.

Einen zweizähnigen Bipyrimidyl-Liganden zur Stabilisierung eines Palladiumkatalysators beschreiben M. R. Buchmeister et. al. in J. Organomet. Chem. 2001, 634, 39-46. Damit lassen sich Kupplungsreaktionen von Styrol bzw. Ethylacrylat mit verschieden substituierten Bromarenen katalysieren.

N-Acyl-N'-alkyl-Übergangsmetallkomplexe wurden bislang nicht beschrieben. N-Acylamidine sind hingegen bekannt. So beschreiben E.-U. Würthwein et al. in Eur. J. Inorg. Chem. 2000, 1739 -1743 vier N-Acylamidinkupfer(II)-Komplexe bei denen das Kupferatom über den Acyl-Sauerstoff und den nicht-alkylierten Amidin-Stickstoff gebunden ist.

Die gleiche Koordination weist ein von J. C. J. Bart et al., Inorganica Chimica Acta, 28 (1978), 201 -210, beschriebener Nickel(II)-Komplex auf. Hierbei wird das Zentralatom von zwei anionischen N-Acylamidin-Liganden komplexiert.

Wegen der herausragenden wirtschaftlichen Bedeutung, die übergangsmetallkatalysierte C-C-verknüpfende Kupplungsreaktionen erlangt haben, besteht nach wie vor Bedarf an verbesserten Katalysatorsystemen. Das Hauptaugenmerk liegt dabei zum einen auf der Entwicklung von Katalysatoren mit höherer katalytischer Aktivität, die sich im großtechnischem Maßstab in höheren Umsatzzahlen und somit einer verbesserten Raum-Zeit-Ausbeute niederschlägt. Zum anderen besteht nach wie vor der Wunsch nach Katalysatoren mit geringer Substratspezifität, d.h. Katalysatoren, die geeignet sind, eine möglichst breite Substratpalette umzusetzen. Diese Katalysatoren sollen darüber hinaus leicht, kostengünstig und in großtechnischem Maßstab zugänglich sein.

Es wurde nun eine neue Klasse von Übergangsmetallkomplexen der allgemeinen Formel I wie eingangs definiert gefunden.

Die Reste R¹ und R² können dabei unabhängig voneinander ein geradkettiger, verzweigter oder cyclischer Kohlenwasserstoffrest mit 1 bis 20 Kohlenstoffatomen, der ein- oder mehrfach ungesättigt sein kann, ein aromatischer Rest mit 6 bis 14 Ringgliedern, der direkt oder über eine C₁- bis C₆-Alkyl- oder C₂- bis C₆-Alkylengruppe gebunden sein kann sein. Beispielsweise können R¹ bzw. R² folgende Bedeutung besitzen:
C₁- bis C₆-Alkyl: Methyl, Ethyl, n-Propyl, 1-Methylethyl, n-Butyl, 1-Methylpropyl, 2-Methylpropyl und 1,1-Dimethylethyl n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1-Ethyl-1-methylpropyl und 1-Ethyl-3-methylpropyl;
C₁- bis C₁₂-Alkyl wie C₁- bis C₆-Alkyl (vorstehend genannt) oder unverzweigtes oder verzweigtes Heptyl, Octyl, Nonyl, Decyl, Undecyl oder Dodecadecyl,
C₂- bis C₆-Alkenyl: z.B. Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl;
C₃- bis C₈-Cycloalkyl: z.B. Cyclopropyl, Cyclobutyl, Cyclopentyl, Cyclohexyl, Cycloheptyl und Cyclooctyl;
Aryl: ein- bis dreikerniger aromatischer Carbocyclus mit 6 bis 14 Ringgliedern, wie z.B. Phenyl, Naphthyl und Anthracenyl;
C₇- bis C₁₂-Aralkyl wie z.B. Phenylmethyl, 1-Phenylethyl, 2-Phenylethyl, 1-Phenylpropyl, 2-Phenylpropyl oder 3-Phenylpropyl;
Diese Reste R¹ und R² können gegebenenfalls substituiert sein, wobei die Substituenten in einem breiten Bereich variiert werden können. Insbesondere seien als mögliche Substituenten genannt:
C₁- bis C₆-Alkyl (wie vorstehend genannt) und darüber hinaus
C₁- bis C₄-Halogenalkyl: einen C₁- bis C₄-Alkylrest, der partiell oder vollständig durch Fluor, Chlor, Brom und/oder lod substituiert ist, also z.B. Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-lodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl und Nonafluorbutyl.

Die Reste R¹ und R² können auch Substituenten wie Alkoxy- Alkoxycarbonyl- und/oder Aminosubstituenten tragen, beispielsweise C₁- bis C₄-Alkoxy wie Methoxy oder Ethoxy, C₂- bis C₆₋Alkoxycarbonyl wie Methoxycarbonyl oder Ethoxycarbonyl oder NH₂, Di-C₁- bis C₄-Alkylamino wie Dimethylamino oder Diethylamino oder C₁- bis C₄-Alkylamino wie Methylamino oder Ethylamino. Die Reste R³ bis R⁶, R⁸, R¹⁰ und R¹¹ folgen den oben aufgeführten Definitionen und können darüber hinaus auch bedeuten:
C₆- bis C₁₀-Aryl: Phenyl und Naphthyl sowie 3- bis 6-gliedriges Heterocyclyl wie z.B. 2-Oxiranyl, 2-Oxetanyl, 3-Oxetanyl, 2-Tetrahyrofuranyl, 3-Tetrahyrofuranyl, 2-Tetrahydropyranyl, 3-Tetrahydropyranyl und 4-Tetrahydropyranyl, 2-Azirinyl, 2-, 3-Tetrahyropyranyl, 3-Tetrahydropyranyl und 4-Tetrahydropyranyl.

Die Reste R⁷ und R⁹ stehen unabhängig voneinander für wie oben definiertes geradkettiges oder verzweigtes C₁- bis C₁₂-Alkyl oder C₇- bis C₁₂-Aralkyl.

Bevorzugt stehen R¹ und R² für verzweigtes oder unverzweigtes C₁- bis C₁₂-Alky), C₇- bis C₁₂₋Aralkyl, C₆. bis C₁₀-Aryl wobei die Reste durch ein bis drei Halogenatome und/oder einen oder zwei C₁-C₆-Alkyl-, Trifluormethyl- und/oder C₁-C₆-Alkoxysubstituenten substituiert sein können.

Ganz besonders bevorzugte Reste R¹ sind verzweigtes oder unverzweigtes C₁- bis C₁₂-Alkyl, insbesondere C₁- bis C₆-Alkyl und C₇- bis C₁₂-Aralkyl wie z.B. Benzyl oder Phenylethyl.

R² steht besonders bevorzugt für verzweigtes oder unverzweigtes C₁- bis C₁₂-Alkyl, insbesondere C₁- bis C₆-Alkyl, C₇- bis C₁₂-Aralkyl oder C₆- bis C₁₀-Aryl, wobei die wie oben genannten aromatischen Reste durch ein bis drei Halogenatome und/oder einen oder zwei C₁- bis C₆-Alkyl-, C₁- bis C₄-Halogenalkyl wie Trifluormethyl- oder C₁- bis C₆-Alkoxysubstituenten substituiert sein können.

Der aromatische Rest des Amidin-Kohlenstoffs Ar kann breit variiert werden und steht für einen 5- bis 14-gliedrigen aromatischen oder heteroaromatischen Rest mit 2 bis 14 Kohlenstoffatomen, der gegebenenfalls durch einen oder mehrere C₁- bis C₆-Alkyl-, C₁- bis C₆-Alkoxycarbonyl-, C₁- bis C₆-Alkoxy-, Trialkylsilyl- bzw. Diarylalkylsilyl- und/oder Trifluormethyl-Substituenten und/oder Halogen wie Fluor, Chlor oder Brom substituiert sein kann. Bevorzugt steht Ar für einen 5 - bis 10-gliedrigen aromatischen oder heteroaromatischen Rest mit 2 bis 10 Kohlenstoffatomen. Mögliche Beispiele hierfür sind z.B.: 2-Furyl, 3-Furyl, 3-Thienyl, 2-Pyrrolyl, 3-Pyrrolyl, 3-Isoxazolyl, 4-Isoxazolyl, 5-Isoxazolyl, 4-Isothiazolyl, 3-Pyrazolyl, 4-Pyrazolyl, 5-Pyrazolyl, 2-Oxazolyl, 4-Oxazolyl, 5-Oxazolyl, 2-Imidazolyl, 4-Imidazolyl, 1,2,4-Oxadiazol-3-yl, 1,2,4-Oxadiazol-5-yl, 1,2,4-Triazol-3-yl, 1,3,4-Oxadiazol-2-yl, 1,3,4-Triazol-2-yl; 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl; 2-Furyl, 3-Furyl, 2-Pyrrolyl, 3-Pyrrolyl, 3-Isoxazolyl, 4-Isoxazolyl, 5-Isoxazolyl, 4-Isothiazolyl, 5- 3-Pyrazolyl, 4-Pyrazolyl, 5-Pyrazolyl, 2-Oxazolyl, 4-Oxazolyl, 5-Oxazolyl, 2-Imidazolyl, 4-Imidazolyl, 1,2,4-Oxadiazol-3-yl, 1,2,4-Oxadiazol-5-yl, 1,2,4-Triazol-3-yl, 1,3,4-Oxadiazol-2-yl, und 1,3,4-Triazol-2-yl; 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl, die gegebenenfalls durch einen oder mehrere C₁- bis C₆-Alkyl-, C₁- bis C₆-Alkoxycarbonyl-, C₁- bis C₆-Alkoxy-, Trialkylsilyl- bzw. Diarylalkylsilyl- und/oder C₁- bis C₄-Halogenalkyl-Substituenten und/oder Halogen substituiert sein kann. Ganz besonders bevorzugt steht Ar für einen 5- oder 6-gliedrigen heteroaromatischen Rest mit 2 bis 6 Kohlenstoffatomen und Sauerstoff und/oder Stickstoff als Heteroatomen, der gegebenenfalls durch einen oder mehrere C₁- bis C₆-Alkyl-, C₁- bis C₆-Alkoxy-, Trialkylsilyl- wie Trimethylsilyl- und/oder C₁-C₄-Halogenalkyl- wie Trifluormethyl-Substituenten und/oder Halogen substituiert sein kann.

Unter Halogen sind die Elemente Fluor, Chlor, Brom und/oder Jod, insbesondere Fluor oder Chlor zu verstehen.

M steht bevorzugt für ein Übergangsmetall ausgewählt aus der Gruppe der Metalle Ru, Rh, Pd, Os, Ir und Pt, ganz besonders bevorzugt für Pd oder Pt.

Die Anzahl der in den erfindungsgemäßen Übergangsmetallverbindungen vorhandenen Liganden X richtet sich nach der Valenz des gewählten Zentralatoms und der Anzahl der vorhandenen Amidin-Liganden. In der allgemeinen Formel I nimmt m bevorzugt den Wert 1 oder 2 an.

Die Anzahl der in den erfindungsgemäßen Übergangsmetallverbindungen vorhandenen Amidin-Liganden der allgemeinen Formel III 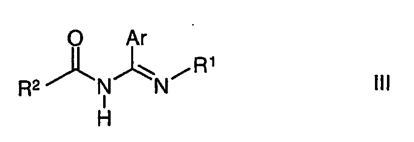 richtet sich analog nach der Valenz des gewählten Zentralatoms und der Anzahl sowie der Ladung der vorhandenen Liganden X. In der allgemeinen Formel I bedeutet n bevorzugt 1 oder 2, besonders bevorzugt 2.

Ganz besonders bevorzugt sind Verbindungen der allgemeinen Formel I, bei denen M für Pd, X für Cl, n für 2 und m für 2 steht. Aus der Gruppe dieser Verbindungen sind insbesondere jene bevorzugt, bei denen R¹ für geradkettiges oder verzweigtes C₁- bis C₁₂-Alkyl das gegebenenfalls durch ein bis drei Halogenatome und/oder einen oder zwei Methyl-, Trifluormethyl- und/oder C₁- bis C₆-Alkoxysubstituenten substituiert sein kann, und R² für geradkettiges oder verzweigtes C₁- bis C₁₂-Alkyl, das gegebenenfalls durch ein bis drei Halogenatome und/oder einen oder zwei Methyl-, Trifluormethyl-, und/oder C₁- bis C₆-Alkoxysubstituenten substituiert sein kann oder für C₇- bis C₁₂-Aralkyl oder C₆- bis C₁₀-Aryl wobei die aromatischen Reste durch ein bis drei Halogenatome und/oder einen oder zwei C₁- bis C₆-Alkyl-, Trifluormethyl- und/oder C₁- bis C₆- genatome und/oder einen oder zwei C₁- bis C₆-Alkyl-, Trifluormethyl- und/oder C₁- bis C₆₋Alkoxysubstituenten substituiert sein können, steht.

Die Erfindung betrifft darüber hinaus ein Verfahren zur Herstellung von N'-substituierten N-Acylamidin-Übergangsmetallkomplexen der allgemeinen Formel I durch Umsetzung von N'-substituierten N-Acylamidinen mit geeigneten, üblicherweise in organischen Lösungsmitteln löslichen Verbindungen der jeweiligen Übergangsmetalle.

Die zur Synthese der erfindungsgemäßen Übergangsmetallkomplexe benötigten N-substituierten Amidine der allgemeinen Formel II 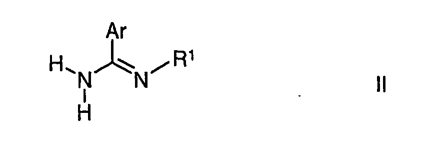 lassen sich nach T. Konakahara et al. (J. Chem. Soc. Perkin Trans. 1, 1987, 1489 -1494) sowie nach J. K. Eberhardt, Diplomarbeit, Universität Münster, 1999, durch Umsetzung von primären Aminen mit aromatischen Nitrilen herstellen. Dazu wird eine Lösung des primären Amins in einem etherischen Lösungsmittel wie etwa Ether oder Tetrahydrofuran vorgelegt und unter Kühlung eine bezogen auf das eingesetzte Amin etwa äquimolare Menge einer zur Deprotonierung des Amins ausreichend starken Base zugegeben. Üblicherweise beträgt die Konzentration der Lösung des Amins zwischen etwa 0,5 und etwa 5 mol/l. Als Base eignen sich z.B. Alkyllithiumverbindungen oder Hydride, jeweils als solche oder in Form von Lösungen oder Suspensionen, bevorzugt n-Butyllithium in gelöster Form. Die Zugabe der Base erfolgt vorteilhafterweise unter Kühlung, üblicherweise bei Temperaturen unterhalb von etwa -30°C, bevorzugt bei Temperaturen unter etwa -70°C.

Im Anschluss daran wird ebenfalls unter Kühlung eine bezogen auf das eingesetzte Amin ebenfalls etwa äquimolare Menge eines Nitrils zugetropft. Die Reaktion erfolgt bei Temperaturen unterhalb von -50°C, bevorzugt unterhalb von -70°C und ist üblicherweise nach 1 bis 2 h abgeschlossen. Nach dem Erwärmen auf Raumtemperatur wird das Reaktionsgemisch durch Zugabe von Wasser oder einem geeigneten protischen Lösungsmittel wie etwa Methanol oder Ethanol oder wässrigen Gemischen derselben hydrolysiert.

Alternativ dazu lassen sich nach P. Luhhardt, Dissertation, Universität Münster, 1989, N-substituierte Amidine der allgemeinen Formel herstellen, indem man zu einem Gemisch von wasserfreiem Aluminiumtrichlord (AlCl₃) und einer etwa äquimolaren Menge eines Nitrils unter Eiskühlung eine bezogen auf die beiden anderen Reaktanden etwa äquimolare Menge eines primären Amins zugibt. Das Reaktionsgemisch wird anschließend auf Temperaturen über 100°C, bevorzugt über 150°C erhitzt. Die Reaktion ist üblicherweise nach etwa 0,5 bis 3 h abgeschlossen.

Die Aufarbeitung des Reaktionsgemisches erfolgt vorteilhafterweise, indem man die Schmelze auf eine vorgekühlte verdünnte Mineralsäurelösung gießt, mit Aktivkohle versetzt und rührt. Nach Filtration und extraktiver Aufarbeitung werden die so hergestellten N-substituierten Amidine durch fraktionierende Destillation gereinigt.

Amidine der allgemeinen Formel II lassen sich beispielsweise zu N'-substituerten N-Acylamidinen der allgemeinen Formel III 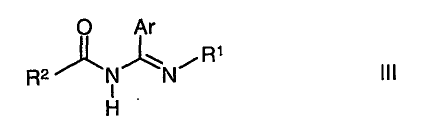 acylieren, indem man das jeweilige N-substituierte Amidin in 2 M Natronlauge löst und bei einer Temperatur von unter 10°C und bezogen auf die Menge des eingesetzten Amidins etwa 0,8 bis etwa 1 Äquivalente eines geeigneten Acylierungsmittels als solches oder in gelöster Form, bevorzugt gelöst in Aceton, zugibt. Die Reaktion wird vorteilhaft bei Temperaturen von bis zu 10°C durchgeführt und ist üblicherweise nach 0,5 bis 4 h abgeschlossen. Die so herstellbaren N'-substituierten N-Acylamidine der allgemeinen Formel III werden, je nach Beschaffenheit, abgesaugt, gewaschen und getrocknet oder extraktiv aufgearbeitet und fraktionierend destilliert.

N'-substituierte N-Acylamidine der allgemeinen Formel III eignen sich zur Herstellung der erfindungsgemäßen Katalysatoren der allgemeinen Formel I. Dazu stellt man zweckmäßigerweise eine etwa 0,05 bis etwa 0,5 molare Lösung eines Amidins der allgemeinen Formel III und einer löslichen Übergangsmetallverbindung, bevorzugt Verbindungen von Palladium oder Platin wie z.B. Palladium(II)-acetylacetonat, Bis(acetonitril)-palladium(II)-chlorid, Dibenzyliden-palladium (Pd₂(dba)₃), Bis(benzonitril)-palladium(II)-chlorid, Platin(II)-acetylacetonat oder Platin(II)-bis-benzonitril)-chlorid in einem mäßig polaren, aprotischen organischen Lösemittel her. Bevorzugt verwendet man dazu halogenierte Lösungsmittel wie z. B. Dichlormethan, Chloroform, 1,2-Dichlorethan oder aromatische Lösungsmittel wie z.B. Benzol, Toluol oder Xylol oder Gemische aus den genannten Lösungsmitteln. Die so erhaltenen Lösungen werden mit einer geeigneten Menge eines weniger polaren, vom zunächst gewählten Lösemittel oder Lösemittelgemischs verschiedenen Lösungsmittels überschichtet. Bevorzugt sind dabei halogenfreie organische Lösungsmittel mit 4 bis 12 Kohlenstoffatomen, besonders bevorzugt etherische Lösungsmittel mit 4 bis 12 Kohlenstoffatomen wie z.B. Diethylether oder Dibutylether.

In einer bevorzugten Ausführungsform des erfindungsgemäßen Verfahrens erhält man N'-substituierte N-Acylamidin-Palladium(II)-komplexe der allgemeinen Formel I indem man 0,1 mmol eines N-Acylamidins der allgemeinen Formel III mit 0,05 mmol (bezogen auf die Anzahl der Palladiumäquivalente) einer löslichen Pd(II)-Verbindung, bevorzugt Bis(benzonitril)-palladium(II)-chlorid, in etwa 0,5 bis etwa 3ml eines polaren halogenierten Lösungsmittels, bevorzugt in Dichlormethan oder Chloroform löst und mit etwa 2 bis etwa 20 ml eines etherischen Lösungsmittels, bevorzugt Diethylether, überschichtet.

Unter Lagerung bei Temperaturen zwischen 0 und 40°C kristallisieren die erfindungsgemäßen Übergangsmetallkomplexe aus der Lösung aus. Die Kristallisationsdauer kann breit variieren und liegt üblicherweise zwischen 1 h und 5 Tagen. Die in der Regel luftstabilen Kristallisate werden abgesaugt und getrocknet.

N'-substituierte N-Acylamidine der allgemeinen Formel III eignen sich auch zur Herstellung von Lösungen der Katalysatoren der allgemeinen Formel I. Dazu stellt man zweckmäßigerweise eine etwa 0,0008 bis 0,5 molare Lösung des Amidins der allgemeinen Formel III und einer löslichen Übergangsmetallverbindung, bevorzugt Verbindungen von Palladium der Platin wie z.B. Palladium(ii)-acetylacetonat, Bis(acetonitril)-palladium(II)-chlorid, Dibenzyliden-palladium (Pd₂(dba)₃), Bis(benzonitril)-palladium(II)-chlorid, Platin(II)-acetylacetonat oder Platin(II)-bis(benzonitril)-chlorid in einem mäßig polaren, aprotischen organischen Lösungsmittel her. Bevorzugt verwendet man dazu halogenierte Lösungsmittel wie z.B. Dichlormethan, Chloroform, 1,2-Dichlorethan oder aromatische Lösungsmittel wie z.B. Benzol, Toluol oder Xylol oder Gemische aus den genannten Lösungsmitteln.

Die Erfindung betrifft darüber hinaus die Verwendung der erfindungsgemäßen Übergangsmetallverbindungen der allgemeinen Formel I als Katalysatoren oder Lösungen derselben für organische Reaktionen, insbesondere für Übergangsmetall-katalysierte Kupplungsreaktionen, bei denen zumindest eine neue chemische Bindung zwischen zwei Kohlenstoffatomen geknüpft wird. Neben diesen C-C-verknüpfenden Reaktionen eignen sich die erfindungsgemäßen Katalysatoren auch als Katalysatoren für organische Reaktionen, bei denen neue Bindungen zwischen Kohlenstoff- und Heteroatomen geknüpft werden.

Bei den durch die erfindungsgemäßen Übergangsmetallkomplexe katalysierten Kupplungsreaktionen können Bindungen zwischen Kohlenstoffatomen gleicher oder unterschiedlicher Hybridisirung geknüpft werden. Die zu verknüpfenden Kohlenstoffatome können unabhängig voneinander jeweils sp-, sp²- oder sp³-hybridisiert sein. Dies umfasst alle Kupplungsreaktionen zwischen Kohlenstoffatomen, die Bestandteil eines Alkyl-, Alkenyl-, Alkin- oder Aryl- bzw. Hetarylsystems sind.

Insbesondere eignen sich die erfindungsgemäßen Übergangsmetallverbindungen als Katalysatoren für Heck-Reaktionen, Suzuki-Kupplungen, Stephens-Castro-Sonogashira-Reaktionen und Stille-Kupplungen und weitere Kupplungsreaktionen, die in der einschlägigen Fachliteratur ausführlich beschrieben sind und bei denen üblicherweise in organischen Lösungsmitteln lösliche Übergangsmetallkomplexe, speziell solche der Übergangsmetalle Pd, Pt, Ni, Cu eingesetzt werden. Sie zeichnen sich dabei durch eine außerordentlich hohe katalytische Aktivität sowie durch hohe Temperaturbeständigkeit aus. Letzteres ermöglicht ihren Einsatz bei hohen Reaktionstemperaturen, die insbesondere bei der Umsetzung wenig reaktiver Substrate vorteilhaft ist.

Wie bei Kupplungsreaktionen üblich, können auch die durch die erfindungsgemäßen Übergangsmetallverbindungen katalysierten Kupplungsreaktionen durch eine Vielzahl von Reagenzien, Additiven und Promotoren optimiert werden. So werden Heck-Olefinierungen und Suzuki-Reaktionen üblicherweise unter Einsatz einer Hilfsbase wie z.B. Tri-n-butylamin, Natriumacetat, Kaliumcarbonat oder Cäsiumcarbonat beschleunigt. Weitere übliche Additive oder Promotoren, deren Funktion teilweise noch nicht erklärt werden kann, sind z.B. Tetraphenylphosphoniumchlorid (Ph₄PCl) oder Tetra-n-butyl-ammoniumchlorid (Bu₄NCl).

Die folgenden Beispiele dienen der Veranschaulichung der Erfindung ohne sie jedoch auf die genannten speziellen Ausführungsformen zu beschränken:

### Beispiele:

### Beispiel 1: Synthese von N-Alkylamidinen

### Allgemeine Arbeitsvorschrift A

In einem ausgeheizten und mit Argon gespülten Schlenkkolben wurden 60 mmol eine primären Amins und 40 ml absolutes Tetrahydrofuran vorgelegt. Die Lösung wurde auf 78°C abgekühlt, und unter Rühren wurden 37,5 ml (60 mmol) n-Butyllithium (1,6 M Lösung in n-Hexan) zugetropft. Man ließ auftauen und rührte weitere 30 Minuten bei Raumtemperatur.

Bei -78°C wurden unter kräftigem Rühren langsam 60 mmol des jeweiligen Nitrils zugetropft. Nach beendeter Zugabe wurde noch 1 Stunde bei -78°C gerührt, dann ließ ,man auftauen und hydrolysierte durch Zugabe von 40 ml Methanol und 40 ml Wasser. Die organische Phase wurde abgetrennt und die wässrige Phase mit Chloroform extrahiert. Die vereinigten Extrakte wurden getrocknet, das Lösungsmittel abdestilliert und der Rückstand im Vakuum fraktioniert.

### Allgemeine Arbeitsvorschrift B

Es wurden 0,15 mol aromatisches Nitril und 20 g (0,15 mol) wasserfreies Aluminiumtrichlorid vorgelegt. Unter Eiskühlung wurden 0,15 mol des primären Amins zugetropft. Nach beendeter Zugabe wurde eine Stunde auf 180°C erhitzt. Die Schmelze wurde langsam auf eine 0°C kalte Lösung aus 5 ml konzentrierter Salzsäure und 400 ml Wasser gegossen. Nach Zugabe von 5 g Aktivkohle wurde weitere 20 Minuten unter Kühlung im Wasserbad gerührt. Die Feststoffe wurden abfiltriert. Das Filtrat wurde in eine stark gerührte 0°C kalte Lösung aus 55 g Natriumhydroxid in 300 ml Wasser gegeben. Die wässrige Phase wurde mit Dichlorhexan extrahiert. Die vereinigten organischen Phasen wurden getrocknet, das Lösungsmittel abdestilliert und der Rückstand im Vakuum fraktioniert.

### Beispiel 2: Acylierung von N-Alkylamidinen

Allgemeine Arbeitsvorschrift A 20 mmol N-Alkylamidin wurden in 25 ml 2 M Natronlauge vorgelegt. Bei 0°C tropfte man unter kräftigem Rühren eine Lösung aus 19 mmol Acylchlorid und 10 ml Aceton zu. Anschließend rührte man weitere 1,5 Stunden bei einer Temperatur von weniger als 10°C. Das ausgefallene Produkt wurde abgesaugt, mit Wasser gewaschen und im Ölpumpenvakuum getrocknet.

### Allgemeine Arbeitsvorschrift B

10 mmol N-Alkylamidin und 10 ml 2 M Natronlauge wurden vorgelegt. Bei 0°C tropfte man unter kräftigem Rühren eine Lösung aus 9,5 mmol Acylchlorid und 5 ml Aceton zu. Anschließend rührte man weitere 1,5 Stunden bei einer Temperatur von weniger als 10°C. Die organische Phase wurde abgetrennt, die wässrige Phase mit Chloroform extrahiert. Die vereinigten Extrakte wurden getrocknet und der Rückstand im Vakuum fraktioniert.

### Beispiel 3: Herstellung von Bis(N-pivaloyl-N'-n-butylbenzamidin)palladium(II)-chlorid

26 mg (0,1 mmol) N-Pivaloyl-N'-n-butylbenzamidin und 19 mg (0,05 mmol) Bis(benzonitril)-palladium(II)-chlorid wurden in 1,5 ml Dichlormethan gelöst. Die Lösung wurde mit 10 ml Diethylether überschichtet. Innerhalb von einigen Stunden bildeten sich gelbe, quaderförmige Kristalle. Das Produkt wurde abgesaugt, mit Diethylether gewaschen und an der Luft getrocknet.

Man erhielt 31 mg (0,044 mmol, 89 % d. Th.) Bis(N-pivaloyl-N'-n-butylbenzamidin)palladium(II)-chlorid.
Schmelzpunkt: 227°C (Zersetzung)

### Beispiel 4: Herstellung von Bis(N-pivalolyl-N'-n-propylbenzamidin)palladium(II)-chlorid

25 mg (0,1 mmol) N-Pivaloyl-N'-n-propylbenzamidin und 19 mg (0,05 mmol) Bis(benzonitril)-palladium(II)-chlorid wurden in 1 ml Chloroform gelöst. Nach 30 Minuten wurde mit 12 ml Diethylether überschichtet. Die Lösung wurde bei 35°C gelagert. Gelbe, rautenförmige Kristalle bildeten sich. Nach drei Tagen war die Kristallisation abgeschlossen. Das Produkt wurde abgesaugt, mit Diethylether gewaschen und an der Luft getrocknet.
Man erhielt 27 mg (0,04 mmol, 81 % der Th.) Bis(N-pivalolyl-N'-n-propylbenzamidin)-palladium(II)-chlorid.
Schmelzpunkt 237°C (Zersetzung)

### Beispiel 5: Herstellung von Bis(N-(4-methylbenzoyl)-N'-n-propylbenzamidin)palladium(II)-chlorid

28 mg (0,1 mmol) N(4-Methylbenzoyl)-N'-n-propylbenzamidin und 19 mg (0,05 mmol) Bis(benzonitril)palladium(II)-chlorid wurden in 0,5 ml Chloroform gelöst. Nach 30 Minuten wurden unter Rühren 2 ml Diethylether zugefügt. Die Lösung wurde mit 10 ml Diethylether überschichtet. Innerhalb von 3 bis 5 Tagen kristallisierte das Produkt aus. Die Kristallisation wurde nach zwei Wochen abgebrochen. Das Produkt wurde abgesaugt, mit Diethylether gewaschen und an der Luft getrocknet.
Man erhielt 27 mg (0,040 mmol, 81 % der Th.) Bis(N-(4-methylbenzoyl)-N'-n-propylbenzamidin)-palladium(II)-chlorid in Form gelber, stäbchenförmiger Kristalle.
Schmelzpunkt 204°C (Zersetzung)

### Beispiel 6: Katalyse der Heck-Reaktion

Die Heck-Kupplungen wurden unter Standard-Reaktionsbedingungen durchgeführt, die in der Literatur beschrieben sind. Zur Durchführung der Kupplungsreaktion wurde eine Lösung aus Arylbromid und 1,0 bis 1,4 Äquivalenten Olefin im hochsiedenen Lösungsmittel Dimethylacetamid mit 1,2 Äquivalenten Hilfsbase und 2 mol% Katalysator versetzt. Die Reaktionsmischung wurde auf 100 bis 140°C erwärmt. Regelmäßig wurden Proben für die Gaschromatographie (GC) entnommen, um den Reaktionsverlauf zu verfolgen. Nach ein bis sieben Tagen wurde die Reaktion abgebrochen. Die Produktionsausbeute wurde per GC unter Verwendung eines internen Standards (Diethylenglykol-di-n-butylether) ermittelt. Als einfache Mustersubstrate wurden Brombenzol und Styrol gewählt, das Reaktionsprodukt ist unsubstituiertes trans-Stilben.

Phasentransferkatalysatoren können in Palladium-katalysierten Kupplungsreaktionen als Promotor wirken. Der Einfluß von Tetra-n-butylammoniumbromid (Bu₄N⁺Cl⁻) und Tetraphenylphosphoniumchlorid (Ph₄P⁺Cl⁻) auf die Ausbeute der Kupplungsreaktion wurde in mehreren Versuchen untersucht.

Die Heck-Kupplung wurde bei verschiedenen Katalysatorkonzentrationen, Reaktionstemperaturen und teilweise unter Zusatz von Promotoren durchgeführt. Als Substrate wurden Brombenzol und Styrol verwendet und zu Stilben umgesetzt. Als Hilfsbasen dienten Tri-n-butylamin (Bu₃N) und Natriumacetat (NaOAc). Einen Überblick über mehrere Katalyseansätze gibt Tabelle 1.

**Tabelle 1: Heck-Reaktion mit Kastalysator Bis(N-pivalolyl-N'-butylbenzamidin)palladium(II)-chlorid**

| Nr. | Äquivalente Olefin | Hilfsbase | Reaktionsbedingungen | Ausbeute [%] |
|---|---|---|---|---|
| 1 | 1,4 | Bu₃N | 140°C, 6 d | 9 |
| 2 | 1,0 | Bu₃N | 100°C, 7 d | 12 |
| 3 | 1,4 | NaOAc | 100°C, 5 d | < 1 |
| 4 | 1,4 | NaOAc | 140°C, 2 d | 87 |
| 5 | 1,4 | NaOAc | 140°C, 2 d 1 mol% Ph₄PCl | 73 |
| 6 | 1,4 | NaOAc | 140°C, 2 d 20 mol% Bu₄NCl | 81 |

### Beispiel 7: Katalyse der Suzuki-Reaktion

Es wurde die Kupplung von Brombenzol und Benzolboronsäure (Dihydroxyphenylboran) zu Biphenyl untersucht. Die typischen Reaktionsbedingungen wurden an Studien zur Suzuki-Reaktion angelehnt, die der aktuellen Literatur entnommen wurden.

Zur Durchführung der Suzuki-Kreuzkupplung wurde ein Gemisch aus Brombenzol und 1,2 Äquivalenten Benzolboronsäure in Toluol mit 2 Äquivalenten Hilfsbase Bis(N-pivaloyl-N'-butylbenzamidin)palladium(II)-chlorid und als Katalysator versetzt. Die Reaktionen wurden bei 85 bis 110°C durchgeführt. Zur Überwachung des Reaktionsverlaufs, wurden regelmäßig Proben für die Gaschromatographie (GC) entnommen. Nach einer bis 72 Stunden wurden die Reaktionen abgebrochen. Die Produktausbeuten wurden per GC unter Verwendung des internen Standards Diethylenglykol-di-n-butylether ermittelt.

Tabelle 2 fasst die Versuche zur Kupplung von Brombenzol und Benzolboronsäure zu Biphenyl unter Katalyse von Bis(N-pivaloyl-N'-butylbenzamidin)palladium(II)-chlorid zusammen.

**Tabelle 2: Suzuki-Reaktion von Brombenzol mit Benzolboronsäure unter Katalyse von Bis(N-pivaloyl-N'-butylbenzamidin)palladium(II)-chlorid**

| Nr. | Katalysator konzentration | Hilfsbase | Reaktionsbedingungen* | Ausbeute [%] | TON** |
|---|---|---|---|---|---|
| 1 | 0,4 mol% | K₂CO₃ | 85°C, 1 h | > 99 | 250 |
| 2 | 0,5 mol% | K₂CO₃ | 50°C, 48 h | 86 | 172 |
| 3 | 0,1 mol% | K₂CO₃ | 85°C, 3 h | 87 | 870 |
| 4 | 0,1 mol% | K₂CO₃ | 85°C, 24 h | 92 | 920 |
| 5 | 0,1 mol% | K₂CO₃ | 85°C, 72 h | 41 | 4100 |
| 6 | 0,1 mol% | Cs₂CO₃ | 85°C, 48 h | 35 | 3500 |
| 7 | 0,1 mol% | K₂CO₃ | 110°C, 24 h | 94 | 9400 |
| 8 | 0,0017 mol% | K₂CO₃ | 110°C, 4 h | 97 | 58000 |
| 9 | 4,5·10⁻⁴ mol% | K₂CO₃ | 110°C, 3 h | 98 | 218000 |

| | | | | | |
|---|---|---|---|---|---|
| *) Kupplung von 1.0 Äquivalenten Brombenzol und 1,2 Äquivalenten Benzolboronsäure, Verwendung von 2,0 Äquivalenten Hilfsbase; | | | | | |
| **) Umsatzzahl (TON) = mol (Produkt)/mol (Katalysator) | | | | | |

## Patentansprüche

1. N'-substituierte N-Acylamidin-Übergangsmetallkomplexe der allgemeinen Formel I 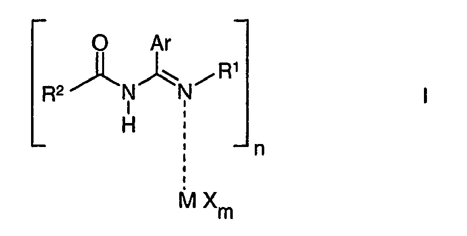 in der
M für ein Übergangsmetall, ausgewählt aus der Gruppe der Metalle Ni, Cu, Ru, Rh, Pd, Os, Ir und Pt
X für Cl, Br, Triflat, Methansulfonat oder p-Toluolsulfonat
m für 0,1 oder 2,
n für 1, 2 oder 3
stehen und die Reste folgende Bedeutung haben:
R¹, R² ein geradkettiger, verzweigter oder cyclischer Kohlenwasserstoffrest mit 1 bis 20 Kohlenstoffatomen, der ein- oder mehrfach ungesättigt sein kann, ein aromatischer Rest mit 6 bis 14 Ringgliedern, der direkt oder über eine C₁- bis C₆-Alkyl- oder C₂- bis C₆-Alkylengruppe gebunden ist, wobei die genannten Reste einen oder mehrere Substituenten ausgewählt aus der Gruppe C₁- bis C₆-Alkyl, C₁- bis C₄-Halogenalkyl, OR³, NR⁴R⁵, COOR⁶, Si(R⁷)₃, Si(R⁷)₂R⁸, Halogen, Aryl, C₃-C₈-Cycloalkyl tragen können,
R³, R⁶, R⁸ unabhängig voneinander C₁- bis C₁₂-Alkyl, C₇- bis C₁₂-Aralkyl, C₆- bis C₁₀₋Aryl, C₃- bis C₈-Cycloalkyl, C₃- bis C₈-Cycloalkyl, in dem eine CH₂-Gruppe durch O, NH oder NR⁹ ersetzt ist,
R⁴, R⁵, R¹⁰, R¹¹ unabhängig voneinander jeweils Wasserstoff, geradkettiges oder verzweigtes C₁- bis C₁₂-Alkyl, C₇- bis C₁₂-Aralkyl, C₆- bis C₁₀-Aryl, C₃- bis C₈-Cycloalkyl oder C₃- bis C₈-Cycloalkyl, in dem eine CH₂-Gruppe durch O, NH oder NR⁹ ersetzt ist und R⁴ und R⁵ bzw. R¹⁰ und R¹¹ jeweils gemeinsam auch -(CH₂)_{y}-, wobei y eine ganze Zahl von 4 bis 7 ist, bedeuten können;
R⁷, R⁹ unabhängig voneinander geradkettiges oder verzweigtes C₁- bis C₁₂-Alkyl oder C₇- bis C₁₂-Aralkyl,
Ar C₆-C₁₀-Aryl oder Hetaryl mit 5 bis 10 Ringgliedern, wobei die genannten Reste durch C₁- bis C₆-Alkyl, C₁- bis C₄-Halogenalkyl, NR¹⁰R¹¹, COOR⁶, Si(R⁷)₃ Si(R⁷)₂R⁸, OR³ und/oder Halogen substituiert sein können.

2. Übergangsmetallkomplexe der Formel I gemäß Anspruch 1, in der M für ein Übergangsmetall ausgewählt aus der Gruppe Ru, Rh, Os, Ir, Pd oder Pt steht.

3. Übergangsmetallkomplexe der Formel I gemäß Anspruch 1, in der M für Pd oder Pt steht und m bzw. n 2 bedeuten.

4. Übergangsmetallkomplexe der Formel 1 gemäß den Ansprüchen 1 bis 3, in der
R¹ und R² für verzweigtes oder unverzweigtes C₁- bis C₁₂-Alkyl, C₇- bis C₁₂₋Aralkyl, C₆- bis C₁₀-Aryl stehen, wobei die genannten Reste durch ein bis drei Halogenatome und/oder einen oder zwei C₁-C₆-Alkyl-, Trifluormethyl- und/oder C₁- bis C₆-Alkoxysubstituenten substituiert sein können, und
Ar C₆-C₁₀-Aryl oder Hetaryl mit 5 oder 6 Ringgliedern bedeutet, wobei die genannten Reste durch einen oder mehrere C₁- bis C₆-Alkyl-, C₁- bis C₆-Alkoxycarbonyl-, C₁- bis C₆-Alkoxy-, Trialkylsilyl- bzw. Diarylalkylsilyl-und/oder Trifluormethyl-Substituenten und/oder Halogen substituiert sein können.

5. Verfahren zur Herstellung von N'-substituierten N-Acylamidin-Übergangsmetallkomplexen der allgemeinen Formel I gemäß den Ansprüchen 1 bis 4, **dadurch gekennzeichnet, dass** man einen N'-substituierten N-Acylamidin-Liganden der Formel III 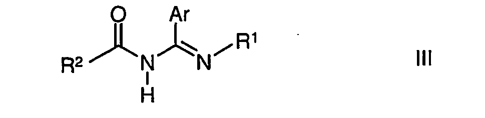 und eine das gewünschte Zentralatom M nach Formel I enthaltende Übergangsmetallverbindung in einem organischen Lösungsmittel oder in einem Gemisch von verschiedenen organischen Lösungsmitteln löst und die N'-substituierten N-Acylamidin-Übergangsmetallkomplexe durch Zugabe eines weiteren, vom zunächst eingesetzten Lösungsmittel verschiedenen Lösungsmittels oder Lösungsmittelgemischs, zur Kristallisation bringt.

6. Verfahren nach Anspruch 5, **dadurch gekennzeichnet, dass** man als erstes Lösungsmittel ein halogeniertes oder aromatisches Lösungsmittel oder ein Gemisch von verschiedenen halogenierten oder aromatischen Lösungsmitteln verwendet und zur Kristallisation ein etherisches Lösungsmittels oder Lösungsmittelgemisch zusetzt.

7. Verwendung von N'-substituierten N-Acylamidin-Übergangsmetallkomplexen der Formel 1 gemäß den Ansprüchen 1 bis 4 als Katalysatoren.

8. Verwendung nach Anspruch 7 für übergangsmetallkatalysierte Kupplungsreaktionen, bei denen mindestens eine neue Bindung zwischen zwei Kohlenstoffatomen geknüpft wird.

9. Verwendung nach Anspruch 7 und 8 für übergangsmetallkatalysierte Olefinierungs-, Alkinylierungs-, Arylierungs- oder Diarylkupplungsreaktionen.

## Claims

1. An N'-substituted N-acylamidine-transition metal complex of the general formula I 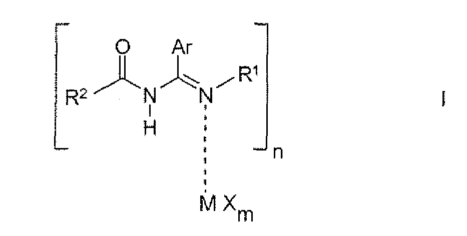 where
M is a transition metal selected from the group of the metals Ni, Cu, Ru, Rh, Pd, Os, Ir and Pt
X is Cl, Br, triflate, methanesulfonate or p-toluenesulfonate
m is 0, 1 or 2,
n is 1, 2 or 3
and the radicals are defined as follows:
R¹, R² are each a straight-chain, branched or cyclic hydrocarbon radical having from 1 to 20 carbon atoms which may be mono- or polyunsaturated, an aromatic radical having from 6 to 14 ring members which may be bonded directly or via a C₁- to C₆-alkyl or C₂- to C₆-alkylene group, and the radicals mentioned may bear one or more substituents selected from the group of C₁- to C₆-alkyl, C₁- to C₄-haloalkyl, OR³, NR⁴R⁵, COOR⁶, Si(R⁷)₃, Si(R⁷)₂R⁸, halogen, aryl, C₃-C₈-cycloalkyl,
R³, R⁶, R⁸ are each independently C₁- to C₁₂-alkyl, C₇- to C₁₂-aralkyl, C₆- to C₁₀-aryl, C₃- to C₈-cycloalkyl, C₃- to C₈-cycloalkyl in which one CH₂ group has been replaced by O, NH or NR⁹,
R⁴, R⁵, R¹⁰, R¹¹ are each independently hydrogen, straight-chain or branched C₁- to C₁₂₋alkyl, C₇- to C₁₂-aralkyl, C₆- to C₁₀-aryl, C₃- to C₈-cycloalkyl or C₃- to C₈₋cycloalkyl in which one CH₂ group has been replaced by O, NH or NR⁹, and R⁴ and R⁵ and/or R¹⁰ and R¹¹ may each together be -(CH₂)_{y}-, where y is an integer from 4 to 7;
R⁷, R⁹ are each independently straight-chain or branched C₁- to C₁₂-alkyl or C₇- to C₁₂-aralkyl,
Ar is C₆-C₁₀-aryl or hetaryl having from 5 to 10 ring members, and the radicals mentioned may be substituted by C₁- to C₆-alkyl, C₁- to C₄-haloalkyl, NR¹⁰R¹¹, COOR⁶, Si(R⁷)₃, Si(R⁷)₂R⁸, OR³ and/or halogen.

2. The transition metal complex of the formula I according to claim 1 where M is a transition metal selected from the group of Ru, Rh, Os, Ir, Pd and Pt.

3. The transition metal complex of the formula I according to claim 1 where M is Pd or Pt and m and n are each 2.

4. The transition metal complex of the formula I according to any of claims 1 to 3 where
R¹ and R² are each branched or unbranched C₁- to C₁₂-alkyl, C₇- to C₁₂-aralkyl, C₆- to C₁₀-aryl, and the radicals mentioned may be substituted by from one to three halogen atoms and/or one or two C₁-C₆-alkyl, trifluoromethyl and/or C₁- to C₆-alkoxy substituents, and
Ar is C₆-C₁₀-aryl or hetaryl having 5 or 6 ring members, and the radicals mentioned may be substituted by one or more C₁- to C₆-aikyl, C₁- to C₆-alkoxycarbonyl C₁- to C₆-alkoxy, trialkylsilyl or diarylalkylsifyl and/or trifluoromethyl substituents and/or halogen.

5. A process for preparing N'-substituted N-acylamidine-transition metal complexes of the general formula I according to any of claims 1 to 4, which comprises dissolving an N'-substituted N-acylamidine ligand of the formula III 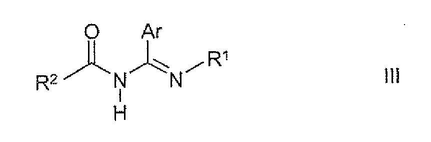 and a transition metal compound comprising the desired central atom M according to formula I in an organic solvent or in a mixture of different organic solvents and crystallizing the N'-substituted N-acylamidine-transition metal complex by adding a further solvent different to the solvent or solvent mixture used initially.

6. The process according to claim 5, wherein the first solvent used is a halogenated or aromatic solvent or a mixture of different halogenated or aromatic solvents, and an ethereal solvent or solvent mixture is added for crystallization.

7. The use of an N'-substituted N-acylamidine-transition metal complex of the formula I according to any of claims 1 to 4 as a catalyst.

8. The use according to claim 7 for transition metal-catalyzed coupling reactions in which at least one new bond is formed between two carbon atoms.

9. The use according to claims 7 and 8 for transition metal-catalyzed olefination, aikynylation, arylation or diaryl coupling reactions.

## Revendications

1. Complexes de N-acylamidine-métal de transition substitués par N', de la formule générale I 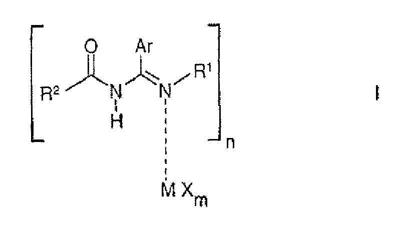 dans laquelle
M représente un métal de transition, choisi dans le groupe des métaux Ni, Cu, Ru, Rh, Pd, Os, Ir et Pt
X représente du Cl, du Br, du triflate, du méthanesulfonate ou du p-toluènesulfonate
m représente 0, 1, ou 2
n représente 1, 2, ou 3
et les radicaux ont la signification suivante :
R¹, R ² radical hydrocarbure linéaire, ramifié ou cyclique, avec de 1 à 20 atomes de carbone, qui peut être insaturé une ou plusieurs fois, radical aromatique avec de 6 à 14 sommets de cycle, qui sont liés directement par un groupe alkyle en C₁-C₆ ou par un groupe alkylène en C₂₋C₆, où lesdits radicaux peuvent porter un ou plusieurs substituants choisis dans les groupes alkyle en C₁-C₆, halogénoalkyle en C₁-C₄, OR³, NR⁴R⁵, COOR⁶, Si(R⁷)₃, Si(R⁷)₂R⁸, halogène, aryle, cycloalkyle en C₃-C₈,
R³, R⁶, R⁸ indépendamment l'un de l'autre, alkyle en C₁-C₁₂, aralkyle en C₇-C₁₂, aryle en C₆-C₁₀, cycloalkyle en C₃-C₈, et cycloalkyle en C₃-C₈ dans lequel un groupe CH₂ est remplacé par O, NH ou NR⁹,
R⁴, R⁵, R¹⁰, R¹¹ indépendamment l'un de l'autre, respectivement hydrogène, alkyle en C₁-C₁₂, aralkyle en C₇-C₁₂, aryle en C₆-C₁₀, cycloalkyle en C₃-C₈, ou cycloalkyle en C₃-C₈ dans lequel un groupe CH₂ est remplacé par O, NH ou NR⁹, tous étant linéaires ou ramifiés, et R⁴ et R⁵ ou bien R¹⁰ et R¹¹ pouvant aussi signifier respectivement collectivement - (CH₂)_{y}-, où y est un nombre entier de 4 à 7 ;
R⁷, R⁹ indépendamment l'un de l'autre, alkyle en C₁-C₁₂, ou aralkyle en C₇-C₁₂, linéaires ou ramifiés,
Ar aryle ou hétaryle en C₆-C₁₀ avec de 5 à 10 sommets de cycle, où lesdits radicaux peuvent être substitués par de l'alkyle en C₁₋C₆, de l'halogénoalkyle en C₁-C₄, NR¹⁰R¹¹, COOR⁶, Si (R⁷)₃, Si(R⁷)₂R⁸, OR³, et/ou de l'halogène.

2. Complexes de métal de transition de la formule I selon la revendication 1, dans laquelle M représente un métal de transition choisi dans les groupes Ru, Rh, Os, Ir, Pd, ou Pt.

3. Complexes de métal de transition de la formule I selon la revendication 1, dans laquelle M représente du Pd ou du Pt, et m, respectivement n, signifient 2.

4. Complexes de métal de transition de la formule I selon les revendications 1 à 3, dans laquelle
R¹ et R² représente de l'alkyle en C₁-C₁₂, de l'aralkyle en C₇-C₁₂, de l'aryle en C₆-C₁₀, ramifiés ou non ramifiés, où lesdits radicaux peuvent être substitués par un à trois atomes d'halogène et/ou un à deux substituants alkyle en C₁-C₆, trifluorométhyle, et/ou alcoxy en C₁₋C₆, et
Ar signifie aryle ou hétaryle en C₆-C₁₀ avec 5 ou 6 sommets de cycle, où lesdits radicaux peuvent être substitués par un ou plusieurs substituants alkyle en C₁-C₆, alcoxycarbonyle en C₁-C₆, alcoxy en C₁-C₆, trialkylsilyle ou bien diarylalkylsilyle, et/ou trifluorométhyle, et/ou de l'halogène.

5. Procédé pour la production de complexes de N-acylamidine-métal de transition substitués par N' de la formule générale I selon les revendications 1 à 4, **caractérisé en ce que** l'on dissout un ligand de N-acylamidine substitué par N' de la formule III 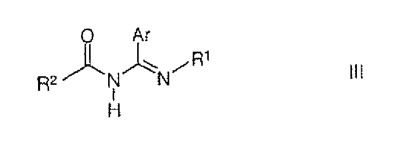 et un composé d'un métal de transition contenant l'atome central M souhaité d'après la formule I, dans un milieu de dilution organique ou dans un mélange de différents milieux de dilution organique, et que l'on fait cristalliser les complexes de N-acylamidine-métal de transition substitués par N' par ajout d'un autre milieu de dilution ou mélange de milieux de dilution différent, issu du milieu de dilution utilisé initialement.

6. Procédé selon la revendication 5, **caractérisé en ce que** l'on utilise comme premier milieu de dilution un milieu de dilution halogéné ou aromatique, ou un mélange de différents milieux de dilution halogénés ou aromatiques, et que l'on ajoute pour la cristallisation un milieu de dilution volatil ou un mélange de milieux de dilution.

7. Utilisation de complexes de N-acylamidine-métal de transition substitués par N' de la formule I selon la revendication 1 à 4, comme catalyseurs.

8. Utilisation selon la revendication 7 pour des réactions de couplage catalysées par un métal de transition, lors desquelles au moins une nouvelle liaison est nouée entre deux atomes de carbone.

9. Utilisation selon la revendication 7 et 8 pour les réactions de raffinage d'huiles, d'alcynylisation, d'arylation, de couplage diaryle, catalysées par un métal de transition.
